Europäisches Patentamt

(19) European Patent Office

Office européen des brevets

(11) Publication number: **0 219 287 B1**

(12) **EUROPEAN PATENT SPECIFICATION**

(45) Date of publication of patent specification:
30.01.91 Bulletin 91/05

(51) Int. Cl.⁵: **H04N 9/29**

(21) Application number: **86307675.8**

(22) Date of filing: **03.10.86**

(54) **Cathode ray tube degaussing circuitry.**

Divisional application 90200076.9 filed on 03/10/86.

(30) Priority: **11.10.85 GB 8525138**
**18.04.86 US 853421**

(43) Date of publication of application:
**22.04.87 Bulletin 87/17**

(45) Publication of the grant of the patent:
**30.01.91 Bulletin 91/05**

(84) Designated Contracting States:
**DE FR GB IT**

(56) References cited:
**DE-A- 2 835 611**
**GB-A- 2 130 859**
**GB-A- 2 150 400**

(73) Proprietor: **RCA LICENSING CORPORATION**
**2 Independence Way**
**Princeton New Jersey 08540 (US)**

(72) Inventor: **Haferl, Peter Eduard**
**Feldblumenstrasse 20**
**CH-8134 Adliswil (CH)**

(74) Representative: **Smith, Thomas Ian**
**Macdonald et al**
**RCA International Limited Burdett House**
**15-16 Buckingham Street**
**London WC2N 6DU (GB)**

## Description

This invention relates to degaussing circuitry for cathode ray tubes such as used in video display equipment.

Color cathode ray tubes require periodic degaussing or demagnetization to counteract the effects of the earth's magnetic field or of electromagnetic fields produced by nearby electrical devices, such as motors or appliances. These fields may magnetize metallic portions of the cathode ray tube, such as a shadow mask, causing degradation of the color purity of the tube. Video display apparatus, such as television receivers and computer or video display monitors, usually incorporate a degaussing circuit which is operative when the apparatus is energized to produce an alternating current field that decays towards zero in order to demagnetize the metallic components in the vicinity of the tube and of the tube itself.

A common type of degaussing circuit is powered from the AC line supply, which in the United States has a frequency of 60 Hz. This type of degaussing circuit ordinarily utilizes a positive temperature coefficient resistor, or thermistor, or other temperature sensitive component, which increases in resistance as it heats due to degaussing current flow. This causes the alternating degaussing current to decay in a manner that provides demagnetization of the cathode ray tube metallic components (See e. g. GB-A-2 130 859).

Another type of degaussing circuit utilizes a resonant or ring-down degaussing circuit. The resonant degaussing circuit operates by causing a capacitor connected in parallel with the degaussing coil to resonate with the coil in an oscillating manner. The finite Q of the resonant circuit causes the degaussing current to decay in the desired manner to effect demagnetization of the display apparatus metallic parts.

The resonant frequency of the degaussing circuit may be of the order of 2 kHz, so that degaussing is completed in less than 5 milliseconds. This time period is short compared to the vertical deflection interval, so that stray flux from the vertical deflection coils may interfere with the degaussing field resulting in a residual magnetism of the metallic parts of the tube. This may cause purity misregister on the display screen of the tube.

In order to eliminate the problem of such interfering stray vertical fields, the degaussing operation, in some prior art circuits, occurs when the vertical deflection field is close to its minimum value, so that little or no stray field is produced (See e. g. GB-A- 2 150 400). In such arrangement, a timing signal that is produced from the vertical sync signal of an incoming video signal is used for starting the degaussing operation. The degaussing operation is time to occur when the vertical deflection field is close to its minimum.

Such arrangement may, disadvantageously, utilize a complex circuitry.

In accordance with an aspect of the invention, a degaussing circuit, for a cathode ray tube of a video display apparatus that is capable of displaying the picture information of a video signal, includes a resonating capacitor that is charged prior to a degaussing interval for developing a voltage in the capacitor. A degaussing coil is disposed about the cathode ray tube. A first switch is responsive to a control signal for coupling the resonating capacitor to the degaussing coil in order to generate an AC degaussing current in the coil having an amplitude that diminishes during the degaussing interval. A second switch couples a source of a supply voltage to a delay network. The second switch is coupled in the current path of the current that is supplied by the supply voltage. The second switch is responsive to the control signal for coupling the supply voltage to the delay network to develop a first voltage at an output of the delay network after the end time of the degaussing interval. The first voltage is coupled to a deflection circuit for generating a deflection current in a deflection winding after the end time of the degaussing interval.

In the Drawings :

FIGURE 1 illustrates a degaussing system embodying an aspect of the invention ;

FIGURE 2 illustrates the waveform of the degaussing current in the circuit of FIGURE 1 ;

FIGURES 3a-3c illustrate waveforms useful in explaining the operation of the degaussing system of FIGURE 1 ; and

FIGURE 4 illustrates a second embodiment of the invention.

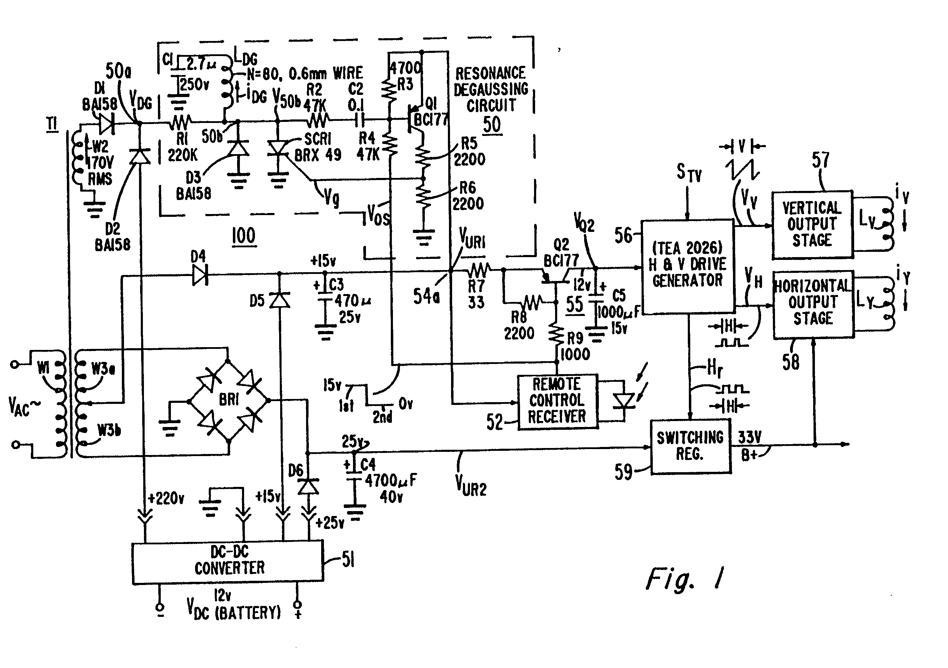

FIGURE 1 illustrates a degaussing system 100 embodying an aspect of the invention. Degaussing system 100 may be used in, for example, a television receiver that is not shown in detail in FIGURE 1. A remote control receiver 52 of the television receiver is responsive to user initiated commands coupled, for example, via an infrared transmission link.

During operation in a standby mode of the television receiver, remote control receiver 52 generates an on/off signal $V_{OS}$ in a first or "off" state that prevents the occurrence of both horizontal and vertical scanning, as described later on. Upon receiving a user initiated "on" command via the infrared transmission link, remote control receiver 52 generates on/off signal $V_{OS}$ at a second or "on" state that initiates degaussing.

The television receiver can be energized by a source of AC mains voltage $V_{AC}$ or, alternately, by a source of a DC voltage $V_{DC}$, such as a battery. Degaussing is provided to a cathode ray tube such as, for example, Hitachi 250ATB22, of the television receiver, when either voltage $V_{AC}$ or voltage $V_{DC}$ is used for energizing the television receiver.

When degaussing system 100 operates from DC

voltage $V_{DC'}$ a DC-to-DC converter 51 that is energized by voltage $V_{DC}$ supplies, via a diode D2, a DC voltage $V_{DG}$ to a terminal 50a of a resistor R1. The other terminal of resistor R1, terminal 50b, is coupled to a degaussing coil $L_{DG}$ that is coupled in series with a resonating capacitor C1. The other terminal of capacitor C1 that is remote from coil $L_{DG}$ is coupled to a common ground terminal. The cathode electrode of a diode D3 is coupled to terminal 50b. The anode electrode of diode D3 is coupled to ground, the common conductor. Diode D3 conducts a degaussing current $i_{DG}$ that flows in coil $L_{DG}$ and capacitor C1 when current $i_{DG}$ is, illustratively, positive. A silicon controlled rectifier switch SCR1 is coupled in parallel with diode D3 between terminal 50b and ground. Switch SCR1 conducts degaussing current $i_{DG}$ when current $i_{DG}$ is at the opposite, or negative polarity. Switch SCR1 is conductive when a voltage $V_g$ at the gate electrode of switch SCR1 is positive. As described later on, voltage $V_g$ becomes positive when on/off signal $V_{OS}$ changes from the "off" to the "on" state. When on/off signal $V_{OS}$ is in the "off" state, switch SCR1 is nonconductive and capacitor C1 is charged via large valued resistor R1 to a voltage that is equal to voltage $V_{DG}$.

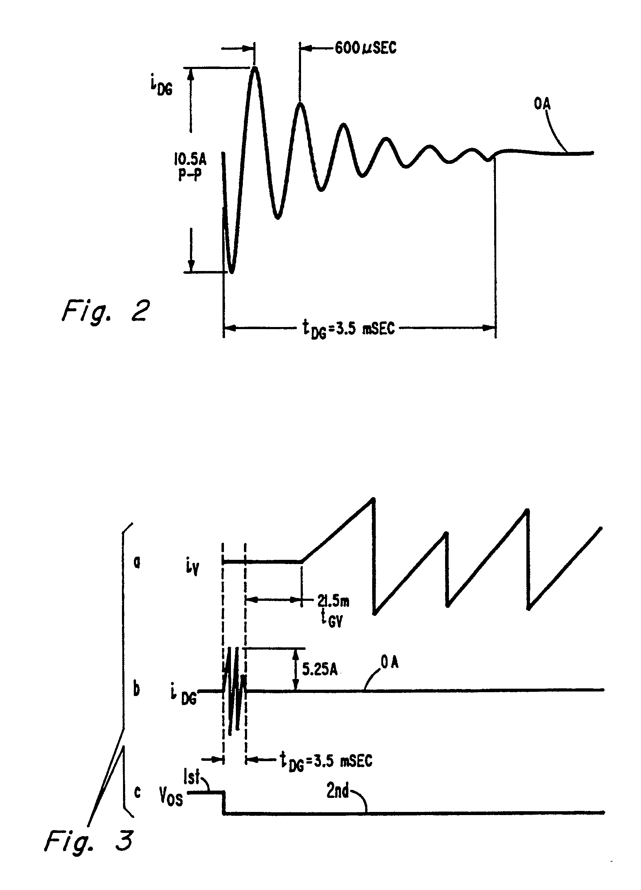

When voltage $V_g$ becomes positive, switch SCR1 conducts. When switch SCR1 conducts, terminal 50b is coupled to ground, thus placing degaussing coil $L_{DG}$ across resonating capacitor C1. The charge stored in resonating capacitor C1 prior to degaussing establishes, in a known manner, a ringing current $i_{DG}$ such as shown in FIGURE 2 that flows in capacitor C1 of FIGURE 1 and in degaussing coil $L_{DG'}$ for degaussing the picture tube. Current $i_{DG}$ produces a maximum degaussing force of illustratively, 320 ampere-turns peak-to-peak.

Because of the finite value of the Q of the resonant degaussing circuit, the energy losses cause the amplitude of current $i_{DG}$ to decay to substantially zero after a degaussing period $t_{DG}$ of, illustratively, 3.5 milliseconds. During period $t_{DG}$ several cycles of current $i_{DG}$ occur that are sufficient to provide degaussing.

Since resistor R1 of FIGURE 1 is large, the current in resistor R1 that flows when switch SCR1 is conductive is small and below the holding current value of the SCR. Switch SCR1 remains conductive as long as voltage $V_g$ is positive. Voltage $V_g$ is positive as long as on/off signal $V_{OS}$ is in the "on" state, as described later on. On/off signal $V_{OS}$ is in the "on" state as long as the television receiver is operating in the normal operation mode.

A supply voltage $V_{UR1}$ is coupled via a diode D5 to a terminal 54a of a resistor R7. The emitter electrode of a transistor switch Q1 is coupled to terminal 54a for applying voltage $V_{UR1}$ to the emitter electrode. The collector electrode of transistor Q1 is coupled to ground via series resistors R5 and R6. Gate voltage $V_g$ of switch SCR1 is developed at a junction terminal between resistors R5 and R6. On/off signal $V_{OS}$ is coupled via a resistor R4 to the base electrode of transistor switch Q1 for controlling the operation of switch Q1.

In standby mode, when on/off signal $V_{OS}$ is in the "off" state, signal $V_{OS}$ is sufficiently positive to turn off transistor switch Q1. Therefore, voltage $V_g$ is zero, switch SCR1 is nonconductive and capacitor C1 is charged to a voltage that is equal to voltage $V_{DG}$. Switch SCR1 becomes nonconductive because switch SCR1 current that is supplied via resistor R1 is lower than the holding current of switch SCR1.

Immediately after on/off signal $V_{OS}$ changes from the "off" to the "on" stage, signal $V_{OS}$ becomes less positive than voltage $V_{UR1}$. The low voltage on the emitter electrode of switch Q1 causes transistor switch Q1 to conduct. When transistor switch Q1 begins conducting, voltage $V_g$ becomes positive, causing switch SCR1 to become conductive and a voltage $V_{50b}$ at terminal 50b to have a negative going transition.

In accordance with an aspect of the invention, the negative going transition of voltage $V_{50b}$ is coupled via a capacitor C2 to the base electrode of transistor switch Q1, causing the base voltage of transistor switch Q1 to become less positive. When the base voltage of transistor switch Q1 becomes less positive, both the emitter and collector currents of transistor switch Q1 increase. Thus, capacitor C2 provides positive feedback that causes transistor switch Q1 to turn on faster. It follows that because of the positive feedback that is provided by capacitor C2, switch SCR1 also, advantageously is turned on faster.

As explained before, oscillations of current $i_{DG}$ in degaussing coil $L_{DG}$ and in resonating capacitor C1 begin when switch SCR1 becomes conductive. The peak amplitude of current $i_{DG}$ in the first cycle of the oscillation is larger if switch SCR1 is turned on faster. Thus, for a given voltage $V_{DG}$ the magnitude of the degaussing current $i_{DG}$ can be, advantageously, increased by using the positive feedback of capacitor C2 that causes switch SCR1 to turn on faster. The faster increase of voltage $V_g$ protects also switch SCR1. For example, if voltage $V_{OS}$ ramps down slowly, it causes voltage $V_g$ to increase slowly, resulting in insufficient gate triggering and that may damage silicon controlled rectifier switch SCR1.

Voltage $V_{UR1}$ at terminal 54a is coupled through a resistor R7 of a delay circuit 55 to the emitter electrode of a transistor switch Q2. A capacitor C5 of delay circuit 55 is coupled to the collector electrode of transistor switch Q2. Capacitor C5 acts as a filter of a voltage $V_{Q2}$ that is developed across capacitor C5 and that energizes a horizontal and vertical drive generator 56. On/off signal $V_{OS}$ that controls also the switching operation of switch Q2 is coupled to the base electrode of transistor switch Q2 through a resistor R9.

During standby mode, signal $V_{OS}$ is at the "off" state, illustratively equal to voltage $V_{UR1}$. Therefore, transistor switch Q2 is nonconductive. When the user wishes to turn on the television receiver, the user sends a corresponding command to remote control receiver 52 that causes on/off signal $V_{OS}$ to change state to the "on" state. Immediately after signal $V_{OS}$ changes to the "on" state, transistor switch Q2 becomes conductive and capacitor C5 of delay circuit 55 begins to charge via resistor R7. The time constant of resistor R7 and capacitor C5 is substantially longer than the degaussing period $t_{DG}$ of FIGURE 2. Therefore, as described in detail later on, generator 56 begins normal operation after a predetermined delay.

Generator 56, that is energized by voltage $V_{Q2}$, receives a composite video signal $S_{TV}$, coupled from, for example, the video detector of the television receiver, that is not shown in the drawing. Generator 56 generates from signal $S_{TV}$ an output control signal $V_v$ having a period V that is equal, in the PAL standard, to approximately 20 milliseconds, and an output control signal $V_H$ that is equal, in the PAL standard, to approximately 64 microseconds. Signals $V_v$ and $H_v$ are coupled to the corresponding input terminals of a vertical output stage 57 and a horizontal output stage 58, respectively. Vertical output stage 57 generates, in accordance with signal $V_v$, a vertical deflection current $i_v$. Similarly, horizontal output stage 58 generates, in accordance with signal $H_v$, a horizontal deflection current $i_Y$ in a horizontal deflection winding $L_Y$.

Generator 56 of FIGURE 1 also generates a horizontal rate output signal Hr that is coupled to a switching regulator 59 that generates a regulated voltage B+. Regulated voltage B+ provides the energizing voltage to horizontal output stage 58.

In order for generator 56 to generate signals $V_v$ and $H_v$ at amplitudes that are required for generating deflection currents $i_v$ and $i_Y$, voltage $V_{Q2}$ that provides power to generator 56 has to exceed a nominal level. As long as voltage $V_{Q2}$ is below the nominal level, signal $V_v$ is not generated ; therefore, the corresponding vertical deflection current $i_v$ is zero.

In accordance with an aspect of the invention, the delay time between voltage $V_{Q2}$ and signal $V_{OS}$, caused by resistors R7 and capacitor C5, causes voltage $V_{Q2}$ to be below the nominal level throughout the degaussing period $t_{DG}$ of FIGURE 2. Thus, degaussing terminates prior to the time in which vertical deflection current $i_v$ of FIGURE 1 is generated. Therefore, the alternating current magnetic field that is generated by degaussing coil $L_{DG}$ decays prior to the formation of the vertical deflection magnetic field. It follows that, advantageously, the vertical deflection field that remains zero during interval $t_{DG}$, does not cause residual magnetism of the metallic parts of the cathode ray tube.

In accordance with a feature of the invention, B+ voltage that energizes output stage 58 and other signal processing circuits of the television receiver, not shown in FIGURE 1, is generated after degaussing ceases.

FIGURES 3a-3c illustrate the waveforms of vertical deflection current $i_v$, degaussing current $i_{DG}$ and on/off signal $V_{OS}$, respectively. Similar numbers and symbols in FIGURES 1, 2 and 3a-3c indicate similar items or functions. FIGURE 3b shows that degaussing current $i_{DG}$, that is initiated by signal $V_{OS}$ of FIGURE 3c, decays to substantially zero an interval $t_{GV}$ that is approximately 21.5 milliseconds prior to the time at which vertical deflection current $i_v$ of FIGURE 3a is generated. The length of interval $t_{GV}$ is determined by capacitor C5 and resistor R7. Advantageously, capacitor C5 performs two different functions. First, it provides filtering. Second, it delays voltage $V_{Q2}$. Thus, delaying current $i_v$ is obtained without adding additional components.

When AC voltage $V_{AC}$ is coupled across a primary winding of a transformer T1, voltage $V_{DG}$ is generated by half-wave rectifying the voltage across a secondary winding W2 of transformer T1 by a diode D1. When voltage $V_{AC}$ is applied, diode D1 generates voltage $V_{DG}$ and diode D2 is back biased. On the other hand, when voltage $V_{DC}$ is applied, diode D2 provides voltage $V_{DG}$ and diode D1 is back biased. Thus, diodes D1 and D2 form a wired inclusive "or" arrangement that isolates DC-to-DC converter 51 from transformer T1 when voltage $V_{AC}$ is applied, and that isolates transformer T1 from converter 51 when voltage $V_{DC}$ is applied. A similar arrangement is used for generating voltage $V_{UR1}$ by utilizing the wired inclusive "or" arrangement of diodes D4 and D5. Likewise, a bridge rectifier BR1 supplies a voltage $V_{UR2}$ that energizes remote control receiver 52 and switching regulator 59 when voltage $V_{AC}$ is applied, whereas a diode D6 supplies voltage $V_{UR2}$ when voltage $V_{DC}$ is applied. Thus, degaussing system 100 is advantageously capable of providing degaussing when the television receiver operates from a DC source such as a battery, or from an AC source line voltage.

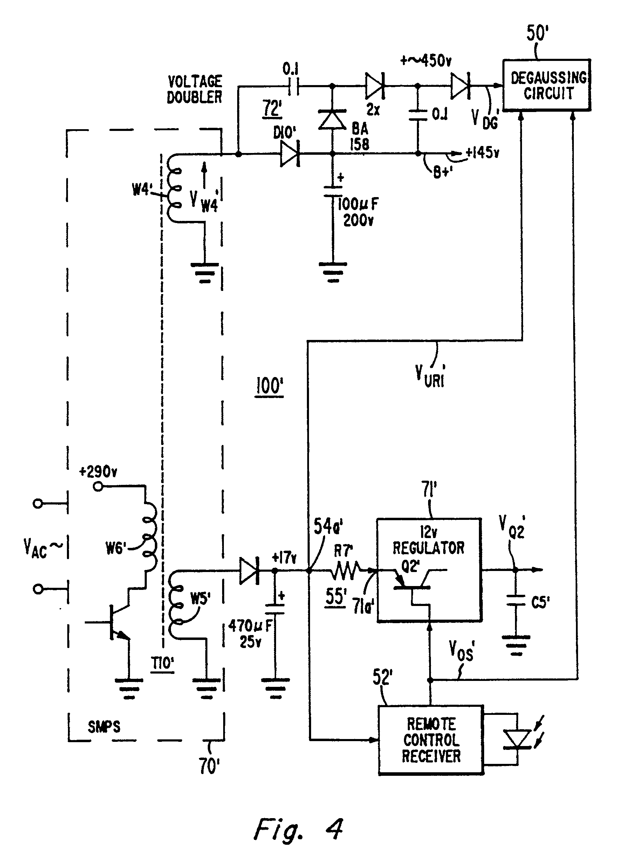

FIGURE 4 illustrates a degaussing system 100' embodying another aspect of the invention that obtains the energizing voltages by rectifying the voltages at secondary windings of a transformer of a switch mode power supply 70'. Similar numbers and symbols in FIGURES 1 and 4 indicate similar numbers or items.

Referring to degaussing system 100' of FIGURE 4, an AC voltage $V_{W4}'$ across a secondary winding W4' of an output transformer T10' of switch mode power supply 70' is rectified and stepped-up in a conventional voltage doubler 72' to provide degaussing voltage $V_{DG}'$ that is equal to approximately the sum of voltage B+' and the peak-to-peak voltage of voltage $V_{W4}'$ across winding W4'. It should be understood that step-up ratios larger than two can be similarly obtained.

In degaussing system 100' resistor R7' is coupled to an input terminal 71a' of a voltage regulator 71' that includes, for example, an input switch Q2'. Switch Q2' couples voltage $V_{UR1}$' to the regulating stages of regulator 71' that generates output voltage $V_{Q2}$' across capacitor C5'. Voltage $V_{Q2}$' supplies the energizing voltage to a conventional vertical output stage that is not shown in FIGURE 4. Thus, capacitor C5' is the required filter capacitor of regulator 71'. Capacitor C5' also provides the capacitive portion of delay circuit 55' that operates, as described before, in a manner similar to delay circuit 55 of degaussing system 100 of FIGURE 1.

## Claims

1. A degaussing circuit for a cathode ray tube of a video display apparatus, comprising :

a resonating capacitor (C1) ;

first means (T1,D1,R1) for developing a voltage across said capacitor prior to a degaussing interval ;

a degaussing coil ($L_{DG}$) that is disposed about said cathode ray tube ;

a source (52) of a control signal ($V_{OS}$) ;

a first switch (SCR1) responsive to said control signal ($V_{OS}$) for coupling said resonating capacitor (C1) to said degaussing coil ($L_{DG}$) for generating in said coil an AC degaussing current having an amplitude that diminishes to a low value during said degaussing interval, and

a second switch (Q2), responsive to said control signal ($V_{OS}$) and coupled in a current path of current that is supplied by a source ($V_{AC}$) of a supply voltage, characterized in that said second switch (Q2) is provided for coupling said supply voltage to a delay network (55) to develop at an output of said delay network a delayed supply voltage ($V_{Q2}$) that is delayed until after at least a substantial portion of said degaussing interval has occurred ; and that

second means (56,57,58) are provided which are responsive to said delayed supply voltage ($V_{Q2}$) for generating a deflection current ($i_v$) in a deflection winding ($L_v$) when said delayed supply voltage is developed such that during said portion of said degaussing interval the generation of said deflection current is prevented.

2. A circuit according to Claim 1 characterized in that said delay network (55) comprises an R-C network (R7,C5) having a time constant that determines the delay of said delay network for developing said delayed supply voltage in a capacitor (C5) of said R-C network (R7,C5).

3. A circuit according to Claim 2 characterized in that said capacitor (C5) of said R-C network (R7,C5) serves as a decoupling capacitance that decouples said delayed supply voltage.

4. A circuit according to Claim 2 characterized in that said R-C network comprises a resistor (R7) that limits the current that is supplied from said source ($V_{AC}$) of said supply voltage.

5. A circuit according to Claim 1 characterized in that said deflection current generating means (56,57,58) generates, in accordance with said delayed supply voltage, said deflection current at a vertical rate after a delay time that is determined by said delayed supply voltage ($V_{Q2}$).

6. A circuit according to Claim 5 characterized in that said deflection current generating means (56,57,58) generates, in accordance with said delayed supply voltage, a second deflection current ($i_Y$) at a horizontal rate.

7. A circuit according to Claim 1 characterized in that said source of control signal comprises a remote control apparatus (52) for said video display apparatus that generates said control signal in accordance with a user initiated command.

8. A circuit according to Claim 1 characterized in that said second switch comprises a series pass transistor (Q2') of a power regulator (71') that regulates said delayed supply voltage.

9. A circuit according to Claim 1 characterized in that said first means comprises a source (W4') of an AC third voltage and a voltage doubler (72') that is coupled to said source (W4') of said third voltage for developing, in accordance with said third voltage, a voltage ($V_{DG'}$) that is substantially higher than the peak voltage of said third voltage ($V_{W4'}$) and that is coupled to said resonating capacitor for developing said voltage across said resonating capacitor.

10. A circuit according to Claim 1 characterized in that said first means comprises a source (T1) of an AC third voltage, a source ($V_{DC}$) of a DC voltage, a DC-to-DC voltage converter (51) coupled to said source ($V_{DC}$) of said DC voltage for generating a higher DC voltage, and means (D1,D2) for selectively coupling only one of said AC third voltage and said higher DC voltage to said resonating capacitor (C1).

11. A circuit according to Claim 10 characterized in that said selectively coupling means comprises first (D1) and second (D2) rectifiers that couple the greater of said AC third and higher DC voltages, respectively, to said resonating capacitance (C1).

12. A circuit according to Claim 11 characterized in that said first rectifier (D1) rectifies said third voltage for developing from the rectified voltage said voltage across said resonating capacitor (C1).

13. A circuit according to Claim 1 characterized in that said first switch comprises a silicon controlled rectifier (SCR1) that couples said resonating capacitor (C1) to said degaussing coil ($L_{DG}$) when said silicon controlled rectifier (SCR1) is conductive.

14. A circuit according to Claim 13 characterized in that said first means comprises a source (T1) of a third supply voltage, and a resistor (R1) that is coupled to said source (T1) of said third supply voltage and to said silicon controlled rectifier (SCR1) for developing said voltage across said resonating capacitor (C1) in accordance with said third supply voltage when said silicon controlled rectifier (SCR1) is nonconductive.

15. A circuit according to Claim 14 characterized in that a current that flows in a current path that includes said resistor (R1) and said silicon controlled rectifier (SCR1) when said silicon controlled rectifier (SCR1) is conductive is lower than the holding current of said silicon controlled rectifier (SCR1), such that said silicon controlled rectifier (SCR1) becomes nonconductive at a time that is determined in accordance with the voltage at the gate electrode thereof.

16. A circuit according to Claim 13 characterized in that said first switch further comprises a transistor (Q1) responsive to said control signal ($V_{OS}$) that is coupled to a control electrode of said transistor (Q1) such that said transistor (Q1) couples said supply voltage ($V_{URI}$) to the gate electrode of said silicon controlled rectifier (SCR1) when said transistor (Q1) is conductive, and an impedance (R2,C2) coupled to a terminal (50b) that is between said degaussing coil ($L_{DG}$) and a current conducting electrode of said silicon controlled rectifier (SCR1) and to said control electrode of said transistor (Q1), wherein said impedance (R2,C2) forms a positive feedback path to speed up, in accordance with the voltage at said terminal (50b), a transition time during which said silicon controlled rectifier is being turned on.

**Ansprüche**

1. Entmagnetisierungsschaltung für eine Kathodenstrahlröhre eines Video-Wiedergabegerätes, enthaltend :

einen Resonanzkondensator (C1) ;

eine erste Einrichtung (T1, D1, R1) zur Erzeugung einer Spannung am besagten Kondensator vor einem Entmagnetisierungsintervall ;

eine Entmagnetisierungsspule ($L_{DG}$), die um die besagte Kathodenstrahlröhre gelegt ist ;

eine Quelle (52) für ein Steuersignal ($V_{OS}$) ;

einen ersten Schalter (SCR1), der auf das Steuersignal ($V_{OS}$) anspricht, um den Resonanzkondensator (C1) mit der Entmagnetisierungsspule ($L_{DG}$) zu koppeln, um in der besagten Spule einen Entmagnetisierungs-Wechselstrom mit einer Amplitude zu erzeugen, die sich während des Entmagnetisierungsintervalls auf einen niedrigen Wert vermindert, und

einen zweiten Schalter (Q2), der auf das Steuersignal ($V_{OS}$) anspricht und in einem Stromweg eines Stroms angeordnet ist, der von einer Quelle ($V_{AC}$) einer versorgungsspannung geliefert wird, dadurch gekennzeichnet,

daß der besagte zweite Schalter (Q2) zum Koppeln der besagten versorgungsspannung auf ein verzögerungsnetzwerk (55) vorgesehen ist, um an einem Ausgang des besagten verzögerungsnetzwerkes eine verzögerte versorgungsspannung (VQ2) zu erzeugen, die bis nach dem Verstreichen mindestens eines wesentlichen Teils des Entmagnetisierungsintervalls verzögert ist,

und daß eine zweite Einrichtung (56, 57, 58) vorgesehen ist, die auf die verzögerte versorgungsspannung ($V_{Q2}$) anspricht, um einen Ablenkstrom ($i_V$) in einer Ablenkwicklung ($L_V$) zu erzeugen, wenn die besagte verzögerte versorgungsspannung entwickelt wird, so daß während des besagten Teils des Entmagnetisierungsintervalls die Erzeugung des Ablenkstroms verhindert wird.

2. Schaltung nach Anspruch 1, dadurch gekennzeichnet, daß das Verzögerungsnetzwerk (55) ein RC-Netzwerk (R7, C5) aufweist, dessen Zeitkonstante die verzögerung des verzögerungsnetzwerkes bestimmt, um die besagte verzögerte versorgungsspannung in einem Kondensator (C5) des RC-Netzwerkes (R7, C5) zu entwickeln.

3. Schaltung nach Anspruch 2, dadurch gekennzeichnet, daß der besagte Kondensator (C5) des RC-Netzwerkes (R7, C5) als eine Entkopplungskapazität dient, welche die besagte verzögerte versorgungsspannung entkoppelt.

4. Schaltung nach Anspruch 2, dadurch gekennzeichnet, daß das RC-Netzwerk einen Widerstand (R7) aufweist, der den von der besagten Quelle ($V_{AC}$) der Versorgungsspannung gelieferten Strom begrenzt.

5. Schaltung nach Anspruch 1, dadurch gekennzeichnet, daß die besagte Ablenkstrom-Erzeugungseinrichtung (56, 57, 58) entsprechend der besagten verzögerten Versorgungsspannung den Ablenkstrom mit einer Vertikalfrequenz nach einer Verzögerungszeit erzeugt, die durch die verzögerte versorgungsspannung ($V_{Q2}$) bestimmt ist.

6. Schaltung nach Anspruch 5, dadurch gekennzeichnet, daß die besagte Ablenkstrom-Erzeugungseinrichtung (56, 57, 58), entsprechend der besagten verzögerten Versorgungsspannung, einen zweiten Ablenkstrom ($i_Y$) mit einer Horizontalfrequenz erzeugt.

7. Schaltung nach Anspruch 1, dadurch gekennzeichnet, daß die besagte Quelle des Steuersignals eine Fernsteuereinrichtung (52) für das besagte Video-Wiedergabegerät aufweist, die das Steuersignal gemäß einem vom Benutzer ausgelösten Befehl erzeugt.

8. Schaltung nach Anspruch 1, dadurch gekennzeichnet, daß der besagte zweite Schalter einen Längstransistor (Q2') eines Leistungsreglers (71') aufweist, der die verzögerte Versorgungsspannung regelt.

9. Schaltung nach Anspruch 1, dadurch gekennzeichnet, daß die besagte erste Einrichtung eine

Quelle (W4') einer als Wechselspannung auftreten- den dritten Spannung und einen Spannungsverdop- pler (72') aufweist, der mit der besagten Quelle (W4') der dritten Spannung gekoppelt ist, um, entsprechend der besagten dritten Spannung, eine Spannung ($V_{DG'}$) zu entwickeln, die wesentlich höher als die Spitzenspannung der besagten dritten Spannung ($V_{W4'}$) ist und die auf den Resonanzkondensator gekoppelt wird, um die besagte Spannung am Resonanzkondensator zu entwickeln.

10. Schaltung nach Anspruch 1, dadurch gekennzeichnet, daß die besagte erste Einrichtung eine Quelle (T1) einer als Wechselspannung auftretenden dritten Spannung, eine Quelle ($V_{DC}$) einer Gleichspannung, einen mit der besagten Quelle ($V_{DC}$) der Gleichspannung gekoppelten Gleichspannungs/Gleichspannungs-Konverter (51) zur Erzeugung einer höheren Gleichspannung und eine Einrichtung (D1, D2) aufweist, um selektiv entweder nur die als Wechselspannung auftretende dritte Spannung oder nur die besagte höhere Gleichspannung auf den Resonanzkondensator (C1) zu koppeln.

11. Schaltung nach Anspruch 10, dadurch gekennzeichnet, daß die selektiv koppelnde Einrichtung einen ersten (D1) und einen zweiten (D2) Gleichrichter aufweist, welche von der als Wechselspannung auftretenden dritten Spannung und der höheren Gleichspannung nur jeweils die größere auf den Resonanzkondensator (C1) koppeln.

12. Schaltung nach Anspruch 11, dadurch gekennzeichnet, daß der erste Gleichrichter (D1) die besagte dritte Spannung gleichrichtet, um aus der gleichgerichteten Spannung die Spannung am Resonanzkondensator (C1) zu entwickeln.

13. Schaltung nach Anspruch 1, dadurch gekennzeichnet, daß der besagte erste Schalter einen gesteuerten Siliziumgleichrichter (SCR1) aufweist, der den Resonanzkondensator (C1) mit der Entmagnetisierungsspule ($L_{DG}$) koppelt, wenn der gesteuere Siliziumgleichrichter (SCR1) leitend ist.

14. Schaltung nach Anspruch 13, dadurch gekennzeichnet, daß die besagte erste Einrichtung eine Quelle (T1) einer dritten Versorgungsspannung und einen Widerstand (R1) aufweist, der mit der Quelle (T1) der besagten dritten Spannung und mit dem gesteuerten Siliziumgleichrichter (SCR1) gekoppelt ist, um die Spannung am Resonanzkondensator (C1) gemäß der besagten dritten Versorgungsspannung zu entwickeln, wenn der gesteuerte Siliziumgleichrichter (SCR1) nichtleitend ist.

15. Schaltung nach Anspruch 14, dadurch gekennzeichnet, daß ein Strom, der in einem den besagten Widerstand (R1) und den besagten gesteuerten Siliziumgleichrichter (SCR1) enthaltenden Stromweg fließt, wenn der gesteuerte Siliziumgleichrichter (SCR1) leitend ist, niedriger ist als der Haltestrom des gesteuerten Siliziumgleichrichters (SCR1), so daß der gesteuerte Siliziumgleichrichter (SCR1) zu einem Zeitpunkt, der entsprechend der Spannung an seiner Gateelektrode bestimmt ist, nichtleitend wird.

16. Schaltung nach Anspruch 13, dadurch gekennzeichnet, daß der besagte erste Schalter ferner einen Transistor (Q1) aufweist, der auf das auf eine Steuerelektrode des besagten Transistors (Q1) gekoppelte Steuersignal ($V_{OS}$) anspricht, so daß der besagte Transistor (Q1) die besagte Versorgungsspannung ($V_{URI}$) auf die Gateelektrode des gesteuerten Siliziumgleichrichters (SCR1) koppelt, wenn der besagte Transistor (Q1) leitend ist, und eine Impedanz (R2, C2), die mit einer zwischen der Entmagnetisierungsspule ($L_{DG}$) und einer stromleitenden Elektrode des gesteuerten Siliziumgleichrichters (SCR1) liegenden Klemme (50b) und mit der besagten Steuerelektrode des besagten Transistors (Q1) gekoppelt ist, wobei die besagte Impedanz (R2, C2) einen Weg positiver Rückkopplung bildet, um entsprechend der Spannung an der besagten Klemme (50b) eine Übergangszeit zu beschleunigen, während welcher der gesteuerte Siliziumgleichrichter eingeschaltet wird.

## Revendications

1. Un circuit de démagnétisation pour un tube à rayons cathodiques d'un appareil de visualisation d'image, comprenant :

un condensateur résonant (C1) ;

un premier moyen (T1,D1,R1) pour produire une tension à travers ledit condensateur avant un intervalle de démagnétisation ;

une bobine de démagnétisation ($L_{DG}$) qui est disposée autour du tube à rayons cathodiques ;

une source (52) d'un signal de commande ($V_{OS}$);

un premier commutateur (SCR1) répondant au signal de commande ($V_{OS}$) pour coupler le condensateur résonant (C1) à la bobine de démagnétisation ($L_{DG}$) pour produire dans ladite bobine un courant de démagnétisation alternatif ayant une amplitude qui diminue à une valeur faible pendant l'intervalle de démagnétisation, et

un second commutateur (Q2) répondant au signal de commande ($V_{OS}$) et couplé dans un trajet de courant du courant qui est appliqué par une source ($V_{AC}$) d'une tension d'alimentation, caractérisé en ce que le second commutateur (Q2) est conçu pour coupler la tension d'alimentation à un circuit à retard (55) pour produire à une sortie du circuit à retard une tension d'alimentation retardée ($V_{Q2}$) qui est retardée jusqu'après qu'au moins une portion sensible de l'intervalle de démagnétisation s'est produite ; et en ce que

des seconds moyens (56, 57, 58) sont prévus qui répondent à la tension d'alimentation retardée ($V_{Q2}$) pour produire un courant de déviation ($i_V$) dans un enroulement de déviation (L$_V$) lorsque 1a tension d'alimentation retardée est produite de telle sorte que pendant ladite portion de l'intervalle de démagnétisation la production du courant de déviation soit empêchée.

2. Un circuit selon la revendication 1, caractérisé en ce que le circuit à retard précité (55) comprend un réseau R-C (R7,C5) ayant une constante de temps qui détermine le retard du circuit à retard pour produire la tension d'alimentation retardée dans un condensateur (C5) du réseau R-C (R7,C5).

3. Un circuit selon la revendication 2, caractérisé en ce que le condensateur précité (C5) du réseau R-C (R7,C5) sert comme condensateur de découplage qui découple la tension d'alimentation retardée précitée.

4. Un circuit selon la revendication 2, caractérisé en ce que le réseau R-C précité comprend une résistance (R7) qui limite le courant qui est appliqué de la source précitée (V$_{AC}$) de la tension d'alimentation précitée.

5. Un circuit selon la revendication 1, caractérisé en ce que le moyen de production du courant de déviation précité (55,57,58) produit, selon la tension d'alimentation retardée précitée, le courant de déviation précité à une fréquence verticale après une période de retard qui est déterminée par la tension d'alimentation retardée (V$_{Q2}$).

6. Un circuit selon la revendication 5, caractérisé en ce que le moyen de production du courant de déviation précité (56,57,58) produit, selon la tension d'alimentation retardée précitée, un second courant de déviation (i$_Y$) à une fréquence horizontale.

7. Un circuit selon la revendication 1, caractérisé en ce que la source précitée du signal de commande comprend un appareil de commande à distance (52) pour l'appareil de visualisation d'image précité qui produit le signal de commande selon une commande initialisée par un utilisateur.

8. Un circuit selon la revendication 1, caractérisé en ce que le second commutateur précité comprend un transistor de passage en série (Q2') d'un régulateur d'alimentation (71') qui régule la tension d'alimentation retardée précitée.

9. Un circuit selon la revendication 1, caractérisé en ce que le premier moyen précité comprend une source (W4') d'une troisième tension alternative et un doubleur de tension (72') qui est couplé à ladite source (W4') de ladite troisième tension pour produire, selon la troisième tension, une tension (V$_{DG'}$) qui est sensiblement plus élevée que la tension de crête de la troisième tension (V$_{W4'}$) et qui est couplée au condensateur résonant précité pour produire la tension à travers le condensateur résonant.

10. Un circuit selon la revendication 1, caractérisé en ce que le premier moyen précité comprend une source (T1) d'une troisième tension alternative, une source (V$_{DC}$) d'une tension continue, un convertisseur de tension continue-continue (51) couplé à ladite source (V$_{DC}$) de la tension continue pour produire une tension continue plus élevée, et un moyen (D1,D2) pour coupler sélectivement seulement l'une des troisième tension alternative et tension continue plus élevée au condensateur résonant (C1).

11. Un circuit selon la revendication 10, caractérisé en ce que le moyen couplant sélectivement précité comprend des premier (D1) et second (D2) redresseurs qui couplent la plus élevée des troisième tension alternative et tension continue plus élevée, respectivement, au condensateur résonant (C1).

12. Un circuit selon la revendication 11, caractérisé en ce que le premier redresseur précité (D1) redresse la troisième tension précitée pour produire à partir de la tension redressée la tension précitée à travers le condensateur résonant précité (C1).

13. Un circuit selon la revendication 1, caractérisé en ce que le premier commutateur précité comprend un redresseur contrôlé au silicium (SCR1) qui couple le condensateur résonant précité (C1) à la bobine de démagnétisation précitée (L$_{DG}$) lorsque le redresseur contrôlé au silicium (SCR1) est conducteur.

14. Un circuit selon la revendication 13, caractérisé en ce que le premier moyen précité comprend une source (T1) d'une troisième tension d'alimentation, et une résistance (R1) qui est couplée à ladite source (T1) de la troisième tension d'alimentation et au redresseur contrôlé au silicium (SCR1) pour produire ladite tension à travers le condensateur de résonance (C1) selon la troisième tension d'alimentation lorsque le redresseur contrôlé au silicium (SCR1) est non conducteur.

15. Un circuit selon la revendication 14, caractérisé en ce qu'un courant qui circule dans un trajet de courant, qui comprend la résistance précitée (R1) et le redresseur contrôlé au silicium précité (SCR1) lorsque le redresseur contrôlé au silicium (SCR1) est conducteur/est plus faible que le courant de maintien du redresseur contrôlé au silicium (SCR1), de telle sorte que le redresseur contrôlé au silicium (SCR1) devienne non conducteur à un instant qui est déterminé selon la tension à l'électrode de porte de celui-ci.

16. Un circuit selon la revendication 13, caractérisé en ce que le premier commutateur précité comprend de plus un transistor (Q1) répondant au signal de commande précité (VOS) qui est couplé à une électrode de commande dudit transistor (Q1) de telle sorte que le transistor (Q1) couple la tension d'alimentation précitée (V$_{UR1}$) à l'électrode de porte du redresseur contrôlé au silicium (SCR1) lorsque le transistor (Q1) est conducteur, et une impédance (R2,C2) couplée à une borne (50b) qui est entre la bobine de démagnétisation précitée (L$_{DG}$) et une électrode conductrice de courant du redresseur contrôlé au silicium (SCR1) et à l'électrode de commande du transistor (Q1), où ladite impédance (R2,C2) forme un trajet de contre-réaction positive pour accélérer, selon la tension à ladite borne (50b) un temps de transition pendant lequel le redresseur contrôlé au silicium est en train de conduire.

Fig. 1

EP 0 219 287 B1

Fig. 2

Fig. 3

*Fig. 4*